# EUROPEAN PATENT APPLICATION

(11) **EP 1 503 359 A1**
(43) Date of publication of application: **02.02.2005**
(21) Application number: 04253913.0
(22) Date of filing: 30.06.2004
(51) Int. Cl.: G09B 7/00

(54) **Evaluation system, method and program for evaluating ability**

(30) Priority: 30.06.2003 JP 2003187016
(71) Applicant: Shizuoka University, Shizuoka City, Shizuoka Pref. (JP)
(72) Inventor: Iida, Hiroyuki, Hamamatsu City Shizuoka Pref. (JP); Hashimoto, Tsuyoshi, Hamamatsu City Shizuoka Pref. (JP)
(74) Representative: Paget, Hugh Charles Edward

(57) **Abstract**

The system includes: a) storing part for storing a plurality of problem groups, which are rated as a plurality of ranks based on difficulty levels, with associated right answers therein; b) first presenting part for presenting two or more problems of the plurality of problem groups, which are rated as a first rank, in the storing part to a user; and c) determination part for receiving answers to said two or more problems presented, to determine whether or not said received answers are correct with reference to the right answers in the storing part, and to obtain a correct answer rate based on the determination result. The system further includes d) first control part for controlling said first presenting part to use a problem group which is rated as a second rank being higher than said first rank when said correct answer rate is greater than a first threshold; e) second control part for controlling said first presenting part to use a problem group which is rated as a third rank being lower than said first rank when said correct answer rate is less than a second threshold; f) third control part for controlling said first presenting part to use problem groups rated as a plurality of ranks by repeating the control operation in the first,and/or second control part twice or more; and g) an ability evaluation part for evaluating ability of said user based on said correct answer rate, which are obtained by each rank of problem group by the determination part, of the received answers.

## Description

### Background of the Invention

### Field of the Invention

The present invention relates to an evaluation system, method and program for evaluating ability.

### Related Art Statements

In general it is recognized in various field that "to validly and accurately evaluate a real ability or competency" of a person is important. However there has not been established a system or approach for validly evaluating real ability of a person in practical sense. For instance, as conventional approaches in traditional fields in Japan (e.g., martial art, arithmetic operation using an abacus, Shogi (Japanese chess), Go (game of go), examination, education, or evaluation of research/education, etc.) skill level, rank, and rate of an individual is fuzzy, opaque phase or index such as kyu (i.e., class), or dan (such as first dan). In addition there is a conventional approach in the examination or education industry that ability of a person can relatively be evaluated by using statistical information such as an adjusted deviation value. In this way user is relatively graded among the all participants (who participate in a certain examination or competition). However, in the conventional evaluation technique using statistical information such as an adjusted deviation value or the like, an evaluation according to this conventional technique is varied depending on a population including participants and relative evaluation of each person in the parent population can be attained. Therefore, the conventional technique cannot "absolutely and validly evaluate" skill or ability of a person.

In a field of competitive systems such as game there is a conventional technique, which is called a "rating system" and is well known, for evaluating ability or skill of a person based on statistical information. For example, in the field of chess Arpad Elo professor developed Elo Rating System (refer to a document: Arpad Elo, "The Rating Chessplayers, Past and Present" published by Arco Publishers, 1978) and then this rating system is very well known in the art and is used in general. This conventional rating system can provide a reliable rating value only if each player has played games great number of times (i.e., at least several tens of times) with other players. Thus this conventional rating system is not applicable to general public and is applicable only to a particular player group such as professional players.

The present invention provides an approach that several problems, which have been previously rated as several ranks, are presented in sequence to a user (person being evaluated) and the ability of the user is identified based on the user's answers to the problems. As described above the present invention utilizes "difficulty" to classify problem into some levels, in this connection there are many theoretical researches about "complexity" of problems. However, these researches are not realized as ability evaluation system. Namely, these complexity theories do not aim at "difficulty of problems", which is familiar to general public. For example, in education fields when preparing trial examination questions for national level, even if using such conventional techniques it is impossible to exactly define difficulty of questions, to select suitable questions based on the definition. As a realistic way, difficulties of questions are rated by experts based on empirical rules, but this rating is not quantitative. In a similar fashion, the same applies to that in other fields (for example, computation training questions for abacus users, rating questions for evaluating a chess or Go player's skill). Also the same applies to that in another country. In the present circumstance, it is very important to validly and properly evaluate ability or skill of a person.

### Summary of the invention

It is an object of the present invention to provide an evaluation system, method and program for validly and properly evaluating ability or skill.

In order to solve the above mentioned problems, there is provided an evaluation system for evaluating ability, said system comprises:
a) storing means for storing a plurality of problem groups, which are rated as a plurality of ranks based on difficulty levels, with associated right answers therein;
b) first presenting means for presenting two or more problems of the plurality of problem groups, which are rated as a first rank, in the storing means to a user;
c) determination means for receiving answers to said two or more problems presented, to determine whether or not said received answers are correct with reference to the right answers in the storing means, and to obtain a correct answer rate based on the determination result;
d) first control means for controlling said first presenting means to use a problem group which is rated as a second rank being higher than said first rank when said correct answer rate is greater than a first threshold;
e) second control means for controlling said first presenting means to use a problem group which is rated as a third rank being lower than said first rank when said correct answer rate is less than a second threshold;
f) third control means for controlling said first presenting means to use problem groups rated as a plurality of ranks by repeating the control operation in the first and/or second control means twice or more; and
g) an ability evaluation means for evaluating ability of said user based on said correct answer rate, which are obtained by each rank of problem group by the determination means, of the received answers.
According to the present invention ability or skill of each person can validly and properly be evaluated and graded.

In an embodiment of the measurement system according to the present invention, said system further comprises:
a second presenting means for presenting ungrouped problems to evaluator groups who are classified into a plurality of ranks based on abilities; and
a grouping means for receiving answers to said ungrouped problems presented, to determine whether or not said received answers are correct with reference to the right answers in the storing means, and to classify the plurality of problem groups in the storing means into problem groups each having a different rank by each difficulty.
According to the present embodiment, ungrouped problems or questions can efficiently and effectively be classified into several ranks by degree of difficulty.

In another embodiment of the measurement system according to the present invention, each of said problem groups is classified into several categories, and said plurality of problems to be presented are randomly selected one by one from each category in the problem group.
According to the present embodiment, since a plurality of problems are randomly selected from variety of categories in the same problem group having respective problems rated as the same rank, and to present the selected plurality problems, so that ability of a person can accurately and fairly be evaluated and graded.

In yet another embodiment of the measurement system according to the present invention, said problem groups are organized in the form of matrix.
According to the present embodiment, since the problem groups can be organized in the form of matrix such that, for example, rows are sorted in ascending order by rank (i.e., degree of difficulty) and columns are sorted by category, it is possible to provide a data format which may be extremely easy to use.

By way of easy explanation the aspect of the present invention has been described as the systems (i.e., devices), however it is understood that the present invention may be realized as methods corresponding to the systems, programs embodying the methods as well as a storage media storing the programs therein.
For example, according to another aspect of the present invention, there is provided an evaluation method for evaluating ability, said method comprises the steps of:
a) storing a plurality of problem groups, which are rated as a plurality of ranks based on difficulty levels, with associated right answers in the storing means;
b) presenting two or more problems of the plurality of problem groups, which are rated as a first rank, in the storing means to a user (for example, by a display device or a speaker);
c) receiving answers to said two or more problems presented, to determine whether or not said received answers are correct with reference to the right answers in the storing means, and to obtain a correct answer rate based on the determination result;
d) controlling said presenting step to use a problem group which is rated as a second rank being higher than said first rank when said correct answer rate is greater than a first threshold;
e) controlling said presenting step to use a problem group which is rated as a third rank being lower than said first rank when said correct answer rate is less than a second threshold;
f) controlling said presenting step to use problem groups rated as a plurality of ranks by repeating the control operation in the step d) and/or step e) twice or more; and
g) evaluating ability of said user based on said correct answer rate, which are obtained by each rank of problem group by the receiving step, of the received answers.

In addition, according to still another aspect of the present invention, there is provided an evaluation program for executing an evaluation method for evaluating ability on a computer, the program comprises the steps of:
a) storing a plurality of problem groups, which are rated as a plurality of ranks based on difficulty levels, with associated right answers in the storing means;
b) presenting two or more problems of the plurality of problem groups, which are rated as a first rank, in the storing means to a user (for example, by a display device or a speaker);
c) receiving answers to said two or more problems presented, to determine whether or not said received answers are correct with reference to the right answers in the storing means, to obtain a correct answer rate based on the determination result;
d) controlling said presenting step to use a problem group which is rated as a second rank being higher than said first rank when said correct answer rate is greater than a first threshold;
e) controlling said presenting step to use a problem group which is rated as a third rank being lower than said first rank when said correct answer rate is less than a second threshold;
f) controlling said presenting step to use problem groups rated as a plurality of ranks by repeating the control operation in the step d) and/or step e) twice or more; and
g) evaluating ability of said user based on said correct answer rate, which are obtained by each rank of problem group by the receiving step, of the received answers.

Now, features and principles of the present invention will be explained in detail. In the present invention, problems are grouped or classified based on degree of difficulty, that is, prior to presenting problems to users problems are previously grouped into several problem groups by degree of difficulty. In order to classify problems based on degrees of difficulty, it is necessary that several groups of evaluators, whose abilities are previously known or rated, are prepared. In the present invention, it is assumed that the evaluators are computers, programs, artificial intelligence or the like, but the evaluators may be human beings in principle. In this connection, users, i.e., persons who are evaluated, can be human beings and users can also be computers, programs, artificial intelligence or the like.

Then, problems (a great number of ungrouped problems), which are to be grouped by degree of difficulty, are presented to an appropriate evaluator group and they are prompted to answer for the presented problems. Here, it is assumed that there are 'n' number of evaluators. 'n' evaluators are set to Xᵢ (i=1,2,...,n) which are sorted by order of ability of respective evaluators such that evaluator X₁ has the highest ability and evaluator Xₙ has the lowest ability. In this situation, there should exist a boundary, at which an evaluator Xᵢ (i=1,2,...,i) can resolve a certain given problem but an evaluator Xᵢ₊₁ cannot resolve the same problem. Thus, the degree of difficulty of the certain given problem corresponds to the degree of ability of the evaluator Xᵢ. Accordingly as matter of convenience the degree of ability of the evaluator Xᵢ can be set to rating (i.e., rank or degree) of difficulty of the certain problem. In other words, when a certain subject who is being evaluated gives right answer to the certain given problem, it is determined that he or she has the ability or skill being equal to or exceed that of Xᵢ. In this way Xᵢ is identified as mentioned above, and if needed additional problems, which are rated as either higher or lower grade, are presented to the Xᵢ. These operation are repeated a predetermined number of times.

After passing through the above mentioned process regarding determination of the degree of difficulty of problems, degree of difficulty of each problem is determined and the processed problems are classified into several groups each having a different rank of degree of difficulty or complexity.
If game problems are to be evaluated, it is noted that problems are not limited to the form of next move problems. In the case of such a game, giving right answer in the game (i.e., solution of the game) means that one defeats a specified opponent from the certain given problem i.e., a given position. Thus in such a problem solution, degree of difficulty of a problem (position) is determined not only by a position itself but also by skill of the opponent player of the game. For example, even if it sounds that a problem itself is easy to resolve, this does not necessarily imply that the problem is rated as an easy rank, since degree of difficulty of a problem may be varied also depending on other factors such as skill or ability of an opponent. Accordingly, if there are two problems which sound easy to resolute, it might happen that they would be separated into different groups, that is, they would be rated as different difficulty ranks.
In order to properly evaluate ability of subjects or users, it is important that problem groups are rich in diversity as described above.

The present invention has a further feature that a great number of problems, which are to be grouped by degree of difficulty, are automatically produced by a computer and the produced problems are automatically grouped by a computer. When the prepared problems are conformity and lack variety, an evaluation technique has disadvantages. It is thought to be similar to that, when a test chart for visual acuity is universal and has the same form throughout the world, if positions of signs and letters in the test chat are memorized by a person who is evaluated, the eye test for that person using the test chart is meaningless. In the present invention in order to overcome this disadvantage, a computer is used to automatically make a great number of problems each having diversity. Furthermore, the produced problems can automatically be grouped or classified into different ranks. For example, when the present invention is applied to a strategy game system like chess or shogi, a computer or computer program may be used to extract positions of games as problem candidates from game records and to let various game programs, each having different skills, to resolve the extracted position i.e., problem candidates. In doing so, the computer will obtain a boundary, at which a certain game program resolves a problem candidate but next game program does not resolve the problem candidate as explained above. Here, the problem candidate can be identified or rated as a certain degree of difficulty level, which corresponds to a skill level of said certain game program, which can resolve the candidate.

### Brief Description of the Drawings

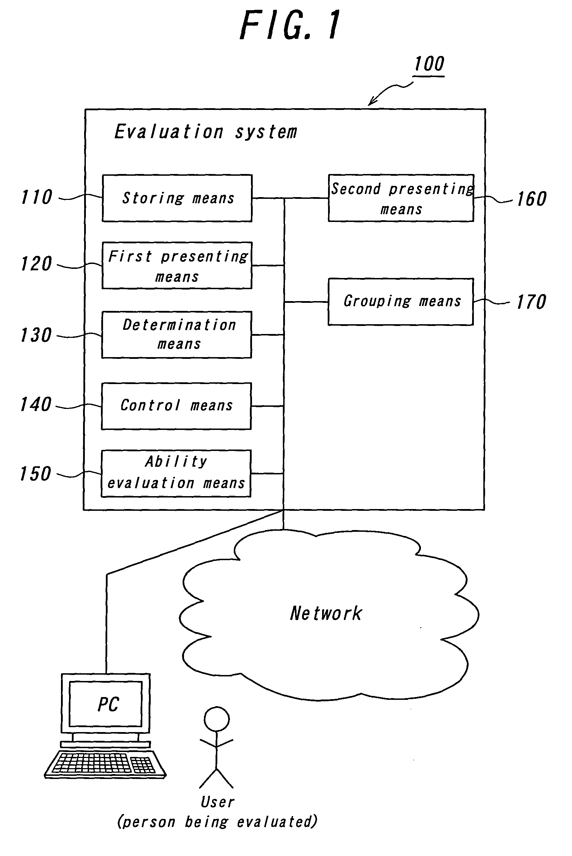

Fig. 1 is a block diagram illustrating a basic configuration of an embodiment of the evaluation system for evaluating ability according to the present.

### Detailed Description of the preferred embodiments

Several preferred embodiments of the present invention will be described with reference to the accompanying drawings.
Fig. 1 is a block diagram illustrating a basic configuration of an embodiment of the evaluation system for evaluating ability according to the present. As shown in Fig. 1, the ability evaluation system 100 comprises: a storing means 110 for storing a plurality of problem groups, which are rated as a plurality of ranks based on difficulty levels, with associated right answers therein; a first presenting means 120 for presenting two or more problems of any one problem group of said plurality of problem groups, which is rated as a first rank, in the storing means to a user by voice or picture; and a determination means 130 for receiving answers to said two or more problems presented, to determine whether or not said received answers are correct with reference to the right answers in the storing means, and to obtain a correct answer rate based on the determination result. The evaluation system 100 further comprises a control means 140. The control means 140 includes subcomponents as follows: a first control means for controlling said first presenting means to use a problem group which is rated as a second rank being higher than said first rank when said correct answer rate is greater than a first threshold; a second control means for controlling said first presenting means to use a problem group which is rated as a third rank being lower than said first rank when said correct answer rate is less than a second threshold; a third control means for controlling said first presenting means to use problem groups rated as a plurality of ranks by repeating the control operation in the first and/or second control means twice or more. The evaluation system 100 further comprises an ability evaluation means 150 for evaluating ability of said user based on said correct answer rate, which are obtained by each rank of problem group by the determination means, of the received answers.
In addition, the ability evaluation system 100 is connected to user PCs directly or via a network such as the Internet. A user(s) accesses to the evaluation system 100 using this PC and is presented problems and he/she transmits answers for the problems to the system 100.

The ability evaluation system 100 further comprises a second presenting system 160 and a grouping means 170. The ability evaluation system 100 is also connected to another computer system (not shown), in which a plurality of programs (i.e., each program acts as an evaluator) are operated, and the second presenting system 160 presents (i.e., transmits via a network) several problems to the another computer systems and lets each program therein answer the problems. Then, the grouping means 170 receives answers for the presented problems from the other computer system and groups or classifies the problems into several problem groups based on the result of the received answers, and to stores the grouping result in the storage. Alternatively, the ability evaluation system 100 may include such evaluating programs (i.e., evaluators) and in this configuration it is possible to operate each evaluating program in a virtual machine (VM) within the system 100.

Now, one embodiment of the ability evaluation system according to the present invention will be explained below for purpose of illustration and not limitation and the ability evaluating system according to the present invention is applicable to various use. In this embodiment, the ability evaluation system evaluates skill or ability of a player (i.e., a person being evaluated) in a strategy game played by two players such as chess or shogi which is well known.

### Structure of Problem Groups

In this embodiment, it is assumed that sufficient quantities of problems are prepared in advance. Process on how to prepare problems will be discussed later. A structure of problem groups is as follows and it is noted that the structure is similar to an eyesight test chart.
- Problems are grouped into a plurality of problem groups each having different difficulty rank. Number of difficulty ranks can arbitrarily be determined as appropriate according to intended applications. In a shogi game for amateur , for instance, difficulty ranks are divided into 15 steps, such as tenth to first kyus and first to fifth dans (which are grading stronger than kyus) in terms of usefulness. Such difficulty ranks directly correspond to skill levels of users.

### Procedure of Skill Evaluation

Skill or ability of a user is evaluated by following steps. When an eyesight test chart is brought to mind the procedure will be easier to be understood.
- Step 1. A problem in a certain problem group, being conceived within an adequate rank, is presented to a user or a person being evaluated (the present invention aims for human beings but a program or device may also be evaluated) and the user is prompted for answer to the presented problem. When it is available to get any information regarding skill level in advance, it is preferable to start from a problem group rated as "an appropriate rank". Otherwise it is preferable to start from a problem group rated as an intermediate rank. A strategy i.e., decision that which rank is selected at a starting point gives an effect on evaluation time, but does not essentially contribute to ability evaluation.
- Step 2. If the answer from the user is right answer, another problem in another problem group, which is rated as the same difficulty rank but is classified into different categories, is presented to the user. If the presented problems have the form of next move problems, it is easily recognized whether or not each answer to each problem is right answer. In this embodiment such as in the strategy game, winning the game corresponds to right answer and losing the game corresponds to a bad answer.
- Step 3. In this way some problems rated as a certain rank are given to the user or subject being evaluated. When the user submits right answers being equal to or more than a certain number (or a correct answer rate is more than a predetermined threshold), the system would select a problem within a next problem group which is rated as a higher rank than that of the problem group used by step 1 and 2. Adversely, when the user submits incorrect answers being equal to or more than a certain number (or a correct answer rate is less than a predetermined threshold), the system would select a problem within a next problem group which is rated as a lower rank than that of the problem group used by step 1 and 2.
- Step 4. In this way, the process eventually converges with a rank corresponding to a skill level of the person who is evaluated and therefore the identification of a skill level evaluation of the person is successfully accomplished

Although the approaches of the present invention looks like the classic eyesight test model, there is a significant difference therebetween on the point that the present ability evaluation system provides problems, which are suitable for each person that is a set of problems are customized for each person, to each person being evaluated. When this invention is applied to war game, it is not necessary to provide a problem such as a type of the next move question.
A problem to be presented to a user can be a problem such that a user wins the game (i.e., problem) from a position provided by that problem and this is also a feature of the present invention. A particular case of this concept corresponds to classical handicap game styles in Japanese chess (shogi) and game of go.

### Preparing problems and Grouping problems based on difficulty level

A problem type in war game will be explained below. In this embodiment, a problem is a position which appears in a game (if a game is shogi, including pieces in hand). Right answer corresponds to that a player who is evaluated wins the game against an opponent player (an opponent player is associated with the presented problem and the opponent player is a computer program having a predetermined game skill) from the position provided by the problem. Categories arise from differences among degrees of superiority of a position provided by a problem according to respective opponent player's skill levels. In other words, when an opponent player program has a high skill level the degree of position superiority is increased, and when an opponent player program has a low skill level the degree of position superiority is decreased.

Procedure of preparing or producing problems and grouping problems based on degrees of difficulty will be explained in detail for a problem type in strategy game. Now, for the sake of convenience computer programs are used as evaluators, the programs are set to Xᵢ (i=1,2,...,n) which are sorted by order of ability of respective evaluators such that evaluator X₁ has the highest ability and evaluator Xₙ has the lowest ability.

### (i) Extracting problem candidates

A great number of positions, which appear in games, are appropriately prepared. When a game is Japanese chess (shogi) or go, there are endless number of positions suitable for problem candidates and they are easy to obtain. Problem candidates may arbitrarily be extracted from a database containing a great number of positions, i.e., diagrams or records of games played by amateur players. Alternatively, problem candidates can be extracted from a database containing game records played by computer program versus computer program. If use of a database of game records played by professional players is permitted, suitable problem candidates may be extracted from such a database. Problem candidates can be positions which cannot appear in a normal game such as a handicap game, for example, in shogi or game of go. Now, a certain phase or position 'P' in a game is extracted as a problem candidate, and the process advances to step (ii).

### (ii) Selecting opponent player

Two computer programs are made to fight from the position P in a game. Here, two computer programs (players) are set to as a following manner and the process advances to step (iii).
- One computer program, which tries to win the game, having a turn to play in this position, is arbitrarily selected. In addition, when preparing a problem table represented in a matrix form of problem groups, which will be explained later, this computer program can preferentially be selected from one of the columns, which has a great number of blank fields or empty elements, in the matrix. The selected program is set to Xⱼ. The program (computer player) Xⱼ is within a problem group which is located in 'j' column in the problem table or matrix.
- Another computer program or evaluator, which tries to evaluate in this position, is selected in order of X₁, X₂, X₃,...,which are sorted by skill level, that is, the first evaluator is X₁. Alternatively, selecting order of that program can be changed freely if preparing problems intended in this invention is accomplished.

### Determination of ranks and categories

In this way, when the two computer players are fixed, a minimum degree of ability or skill necessary for winning the game in the given position or problem can be evaluated and identified. In other words, it is found that there is a boundary between players such that an evaluator program Xᵢ (I=1,2,..,n) can win the game with this position but an evaluator program Xᵢ₊₁ cannot win the game. This boundary can be determined with only one trial. But it is preferable to determine the boundary based on any criteria such that two or more consecutive winning is accomplished or a winning percentage is more than a predetermined threshold value. In this way if such determination criteria or threshold is introduced to determine the boundary the problem table or matrix can be superior in quality. Here, an ability or skill of winner or evaluator Xᵢ corresponds to a rank. In addition, diversification of opponent computer players corresponds to diversified categories. The process, then, goes to step (iv).

### (iv) Storing problems

A given problem P is referred as P_{i,j}, the problem P_{i,j} is stored in a location, which is located in i-th row and j-th column in a problem table of a matrix form. If there is other problems in that location, the new given problem is stacked onto them. These stacked problems in each location in the matrix become elements of "one problem group".
In this connection, each problem is considered with a correct answer (i.e., winning the game).

### (v) Repeating steps

Positions or problems are grouped or classified into a plurality of problem groups by both difficulty rank and category by repeating the steps (i)-(iv) described above and therefore a problem table in matrix form containing classified problem groups is prepared as following example:

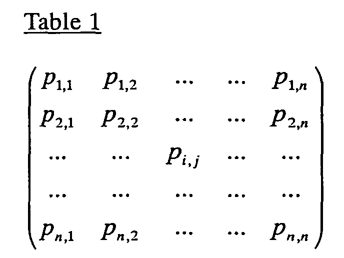

Where P_{i,j} represents a problem group, which corresponds to a problem rated as difficulty rank j and a category (i.e., an opponent computer player) is Xⱼ. It is preferable to give extra consideration to selection of opponent computer players, so that every component in the matrix can be occupied by as much data as possible. However, it does not matter in all the practical sense even if there are empty components or fields in the matrix.

In another embodiment of the present invention, procedure of preparing or producing problems and grouping problems based on degrees of difficulty will be explained in detail for "next move problem". In this embodiment, "a problem" is a position which appears in a game as well as that of the previous embodiment. However, all the right answer or all the correct solution in this embodiment corresponds the proper selection such that a player, who is evaluated, selects the best move among the possible moves in this position. Categories arise from, for example, that a first difference between an evaluation value of the best move (i.e., correct move) and that of the second most prized move in a first problem differs from a second difference between them in a second problem, even if the first and second problems are rated as the same rank, and therefore problems are categorized into several categories by that difference. Because it is conceived that the greater degree of difference between the evaluation values is the more a problem is complicated. For the sake of convenience computer programs are used as evaluators, the programs are set to Xᵢ (i=1,2,...,n) which are sorted by order of ability of respective evaluators such that evaluator X₁ has the highest ability and evaluator Xₙ has the lowest ability.

### (1) Extracting problem candidates

A great number of positions, which appear in games, are appropriately prepared. When a game is Japanese chess (shogi) or go, there are endless number of positions suitable for problem candidates and they are easy to obtain. Problem candidates may arbitrarily be extracted from a database containing a great number of positions, i.e., diagrams or records of games played by amateur players. Alternatively, problem candidates can be extracted from a database containing game records played by computer program versus computer program.
If use of a database of game records played by professional players is permitted, suitable problem candidates may be extracted from such a database. Unlike with previous embodiment, in an extracted problem candidate (i.e., a position), a correct move should be only one, that is, it is preferable that the right answer should be uniquely defined. Therefore, positions as candidates, in which one correct answer (the best move) is likely to be uniquely defined, should be extracted. In this connection, there is a analyzing graph as a conventional technique for evaluating order of superiority of positions, this graph is used for presenting position evaluation values. It is preferable that the functions of the analyzing graph is used to find a point that degree of superiority in a position drastically changes just after a certain move. A position of a last move just before the point is advantageously used as problem candidate. In a similar fashion, problem candidate can be a position such as in a handicap game, and a position having partly position information or only local position such as a shogi mating problem or a brinkmate-problem can be a problem candidate. Now, a certain phase or position 'P' in a game, which is attained in this way, is extracted as a problem candidate, and the process advances to step (2).

### (2) Selecting opponent player (evaluator)

For the extracted position P, an evaluator is selected as follows:
- A computer program or evaluator, who tries to evaluate in this position, is selected in order of X₁, X₂, X₃,...,which are sorted by skill level, that is, the first evaluator is X₁. Alternatively, selecting order of that program can be changed freely if preparing problems intended in this invention is accomplished.

### Determination of difficulty ranks

In this way, when a computer player or the evaluator is fixed, a minimum degree of ability or skill necessary for giving a correct move in the given position or problem can be evaluated and identified. In other words, it is found that there is a boundary between evaluators such that an evaluator program Xᵢ (I=1,2,..,n) can answer the best move with this position but an evaluator program Xᵢ₊₁ cannot answer the best move. The process, then, goes to step (4).

### (4) Determination of categories

When evaluator Xᵢ selects the best move or correct move, a difference between an evaluation value of the best move and that of the second most prized move is recorded. For example, it is assumed that the evaluation difference values are represented on a scale with a range of 1 to 1000. Positions/problems are classified such that; if the value in a position is within a range of 1 to 100 the position/problem is classified into a category 1, and if the value in a position is within a range of 101 to 200 the position/problem is classified into category 2.

### (5) Storing problems

A given problem/position P is referred as P_{i,j,} the problem P_{i,j} is stored in a location, which is located in i-th row and j-th column in a problem table of a matrix form. If there is other problem in that location, the new given problem is stacked onto the other problem. Here, j corresponds to a category number.
In this connection, each problem (e.g., a position and an opponent player) is considered with a correct answer (e.g., for shogi, the best move such as knight moves form a locations A to a location B)

### (6) Repeating steps

Positions and problems are grouped or classified into a plurality of problem groups by both difficulty rank and category by repeating the steps (1)-(5) described above and therefore a problem table in matrix form containing classified problem groups are prepared as following example:

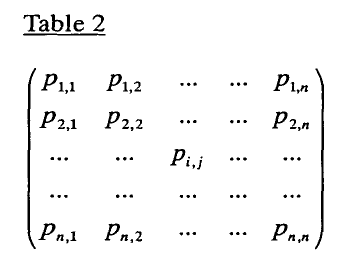

Where P_{i,j} represents a problem group, which corresponds to a problem rated as difficulty rank i and j represents a category.

The evaluation system according to the present invention has actually been applied to an evaluation of player's skill in shogi games, and it is found that this system properly acted as evaluating device and that player's skill or ability level was successfully evaluated.
While the present invention has been described with respect to some embodiments and drawings, it is to be understood that the present invention is not limited to the above-described embodiments, and modifications and drawings, various changes and modifications may be made therein, and all such changes and modifications are considered to fall within the scope of the invention as defined by the appended claims. However, the present invention is mainly explained as embodiments applicable to two players strategy game such as Japanese chess (shogi), the present invention is not limited to such fields and covers general games or the like fields (e.g., examination fields).
For example, the present skill evaluation system according to the invention is easily applicable to strategy games such as war board games played by two players other than Japanese chess (shogi), Western chess, or game of go without any changes to that system, when suitable computer game programs are available. In sports fields such as martial art fields, if robots capable of playing games are available, the present skill evaluation system can be applied to sports fields. Furthermore, the present invention can widely be applied to educational fields such as an academic achievement test. When computer program of skill evaluation having functions as described herein is applied to an academic achievement test, problems or questions can automatically be produced and the produced problems can be grouped by difficulty rank. The produced problems then can be used to evaluate skill or ability of a user (i.e., a student).

## Claims

1. An evaluation system for evaluating ability, said system comprising:
a) storing means for storing a plurality of problem groups, which are rated as a plurality of ranks based on difficulty levels, with associated right answers therein;
b) first presenting means for presenting two or more problems of any one group of the problem groups, which is rated as a first rank, in the storing means to a user;
c) determination means for receiving answers to said two or more problems presented, to determine whether or not said received answers are correct with reference to the right answers in the storing means, and to obtain a correct answer rate based on the determination result;
d )first control means for controlling said first presenting means to use a problem group which is rated as a second rank being higher than said first rank when said correct answer rate is greater than a first threshold;
e) second control means for controlling said first presenting means to use a problem group which is rated as a third rank being lower than said first rank when said correct answer rate is less than a second threshold;
f) third control means for controlling said first presenting means to use problem groups rated as a plurality of ranks by repeating the control operation in the first and/or second control means twice or more; and
g) ability evaluation means for evaluating ability of said user based on said correct answer rate, which are obtained by each rank of problem group by the determination means, of the received answers.

2. The evaluation system according to claim 1, further comprising:
second presenting means for presenting ungrouped problems to evaluator groups who are classified into a plurality of ranks based on abilities; and
grouping means for receiving answers to said ungrouped problems presented, to determine whether or not said received answers are correct with reference to the right answers in the storing means, and to classify the plurality of problem groups in the storing means into problem groups each having a different rank by each difficulty.

3. The evaluation system according to claim 1, wherein each of said problem groups is classified into several categories, and said plurality of problems to be presented are randomly selected one by one from each category in the problem group.

4. The evaluation system according to any one of claims 1 to 3, wherein said problem groups are organized in the form of matrix.

5. A evaluation method for evaluating ability, said method comprising the steps of:
a) storing a plurality of problem groups, which are rated as a plurality of ranks based on difficulty levels, with associated right answers in the storing means;
b) presenting two or more problems of the plurality of problem groups, which are rated as a first rank, in the storing means to a user;
c) receiving answers to said two or more problems presented, to determine whether or not said received answers are correct with reference to the right answers in the storing means, and to obtain a correct answer rate based on the determination result;
d) controlling said presenting step to use a problem group which is rated as a second rank being higher than said first rank when said correct answer rate is greater than a first threshold;
e) controlling said presenting step to use a problem group which is rated as a third rank being lower than said first rank when said correct answer rate is less than a second threshold;
f) controlling said presenting step to use problem groups rated as a plurality of ranks by repeating the control operation in the step d) and/or step e) twice or more; and
g) evaluating ability of said user based on said correct answer rate, which are obtained by each rank of problem group by the receiving step, of the received answers.

6. An evaluation program for executing an evaluation method for evaluating ability, the program comprising the steps of:
a) storing a plurality of problem groups, which are rated as a plurality of ranks based on difficulty levels, with associated right answers in the storing means;
b) presenting two or more problems of any one problem group of the plurality of problem groups, which is rated as a first rank, in the storing means to a user;
c) receiving answers to said two or more problems presented, to determine whether or not said received answers are correct with reference to the right answers in the storing means, and to obtain a correct answer rate based on the determination result;
d) controlling said presenting step to use a problem group which is rated as a second rank being higher than said first rank when said correct answer rate is greater than a first threshold;
e) controlling said presenting step to use a problem group which is rated as a third rank being lower than said first rank when said correct answer rate is less than a second threshold;
f) controlling said presenting step to use problem groups rated as a plurality of ranks by repeating the control operation in the step d) and/or step e) twice or more; and
g) evaluating ability of said user based on said correct answer rate, which are obtained by each rank of problem group by the receiving step, of the received answers.
